Europäisches Patentamt

European Patent Office

Office européen des brevets

(19)

(11) Numéro de publication: **0 025 390**
**B1**

(12) **FASCICULE DE BREVET EUROPEEN**

(45) Date de publication du fascicule du brevet:
14.07.82

(51) Int. Cl.³: **G 03 B 41/18**

(21) Numéro de dépôt: **80401250.8**

(22) Date de dépôt: **02.09.80**

(54) Magasin débiteur de films destiné à équiper un changeur de films radiographiques, et changeur équipé d'un tel magasin.

(30) Priorité: **04.09.79 FR 7922078**

(43) Date de publication de la demande:
**18.03.81 Bulletin 81/11**

(45) Mention de la délivrance du brevet:
**14.07.82 Bulletin 82/28**

(84) Etats contractants désignés:
**DE GB IT SE**

(56) Documents cités:
**FR A 1 571 792**
**FR A 2 247 751**

(73) Titulaire: **CGR COMPANIA GENERALE DI RADIOLOGIA,
Via Monte Albenza 9, I-20052 Monza (IT)**

(72) Inventeur: **Villa, Francesco, "THOMSON-CSF"
SCPI 173, bld Haussmann, F-75360 Paris Cedex 08 (FR)**

(74) Mandataire: **Thrierr, Francoise et al, THOMSON-CSF
SCPI 173, Bld Haussmann, F-75360 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Magasin débiteur de films destiné à équiper un changeur de films radiographiques, et changeur équipé d'un tel magasin.

La présente invention concerne un magasin débiteur de films destiné à équiper un changeur de films radiographiques, susceptible d'alimenter aussi bien les changeurs rapides que les sélecteurs normaux (lents). Le magasin débiteur de film de la présente invention peut équiper tout changeur de film qui présente un dispositif de préhension des films un à un, dont un exemple sera plus particulièrement décrit plus loin.

L'invention concerne également un changeur de films radiographiques équipé d'un magasin selon l'invention.

Il existe actuellement différents types de magasins débiteurs pour changeur de films radiographiques.

Dans un premier type de magasin débiteur, les films, disposés dans le magasin dans une chambre noire, sont séparés par un intercalaire. L'intercalaire, s'il facilite la séparation et la préhension des films un à un, complique bien évidemment l'introduction des films dans le magasin. L'opération d'introduction des films dans le magasin est ainsi très longue et de plus, nécessitant un maniement des films un par un, risque de les détériorer.

Dans un autre type de magasin débiteur, les films sont introduits un par un et sont placés entre deux feuilles enroulées de mylar. Dans ce type de magasin, le chargement peut être motorisé, ce qui est un avantage par rapport au type précédent. Par contre l'inconvénient réside dans l'électricité statique engendrée par le frottement des films dans le mylar.

Un troisième type de magasin débiteur, qui est celui que perfectionne la présente invention, consiste en un magasin dans lequel les films sont introduits dans le magasin directement sous forme de pile, sans intercalaire. Il est clair que ce type de magasin présente l'avantage d'un chargement rapide et simple. Le gros inconvénient de ces changeurs, inconvénient auquel l'invention se propose de remédier, est que des adhérences peuvent se produire entre les films de la pile, en présence d'humidité ou de phénomènes d'électricités statiques dûs au frottement d'un film contre l'autre. De plus, pour que la sélection et la préhension des films un par un soit plus fiable certains magasins de ce type exigent que la tolérance des dimensions des films soit minimum. Le document FR-A-1 571 792 (figures 4 et 7) montre un réceptacle en forme de deux rainures semicirculaires comportant un magasin déformable, ouvert vers l'intérieur du demi-cercle, pour un paquet de films sans intercalaire.

Le magasin débiteur de films de la présente invention est un magasin dans lequel les films sont chargés par paquet, sans intercalaire, ce qui en facilite l'utilisation. Une structure originale du réceptacle des films va permettre d'éliminer les problèmes des frottements des films entre eux lors de leur extraction, évitant ainsi le phénomène des charges électrostatiques. Cette structure permet également d'éliminer la nécessité que les films aient des tolérances dimensionnelles.

Selon l'invention un magasin débiteur de films pour changeur de films radiographiques comportant des moyens de préhension des films un à un, est caractérisé en ce qu'il comporte, dans un boîtier externe étanche à la lumière:

— un réceptacle des films en paquet, en forme de goulotte incurvée ouverte à une extrémité, la cambrure de cette goulotte contraignant le paquet de films qu'elle reçoit à une cambrure suffisante pour leur donner une élasticité provoquant, lors de l'extraction d'un film, un décollement et une séparation brusques du film en cours d'extraction;

— un volet mobile dont l'ouverture permet l'accès à l'ouverture de la goulotte;

— des moyens de déplacement du réceptacle en forme de goulotte tels que, dans une première position dite »de repos«, ce réceptacle soit complètement contenu à l'intérieur du boîtier externe, tandis que dans une deuxième position dite »de chargement et de travail«, dans laquelle le volet mobile est ouvert, le réceptacle est avancé dans le boîtier vers la fente libérée par l'ouverture du volet de manière que l'extrémité correspondante du paquet de films sorte par cette fente et soit accessible pour des moyens de préhension des films équipant le changeur de films.

La structure originale du réceptacle de films, en forme de goulotte incurvée, produit une courbure des films dans le magasin. Cette courbure est avantageusement mise à profit par les moyens de préhension des films équipant le changeur de films pour que le film, dès qu'il est pris en charge par ces moyens de préhension, soit décollé de la pile de films située dans le réceptacle. Ce décollement évite, comme on le verra plus loin, tous les problèmes d'électricité statique.

D'autres avantages, caractéristiques et résultats de l'invention ressortiront de la description suivante donnée à titre d'exemple non limitatif et illustrée par les figures annexées qui représentent:

— les figures 1a et 1b, des vues schématiques, respectivement en coupe et de face, d'un magasin débiteur selon l'invention, prêt à être monté sur le changeur de films radiographiques, c'est-à-dire rempli d'un paquet de films;

— les figures 2a et 2b, des vues schématiques, en coupe, d'un magasin selon l'invention en cours de chargement par un paquet de films;
— les figures 3a et 3b, des vues schématiques, en coupe, d'un magasin selon l'invention à deux stade différents de l'extraction d'un film par les moyens de préhension du changeur qu'il équipe;
— la figure 4, une vue en coupe un peu plus détaillée d'un magasin selon l'invention montrant schématiquement les moyens de commande du volet mobile et du réceptacle en goulotte.

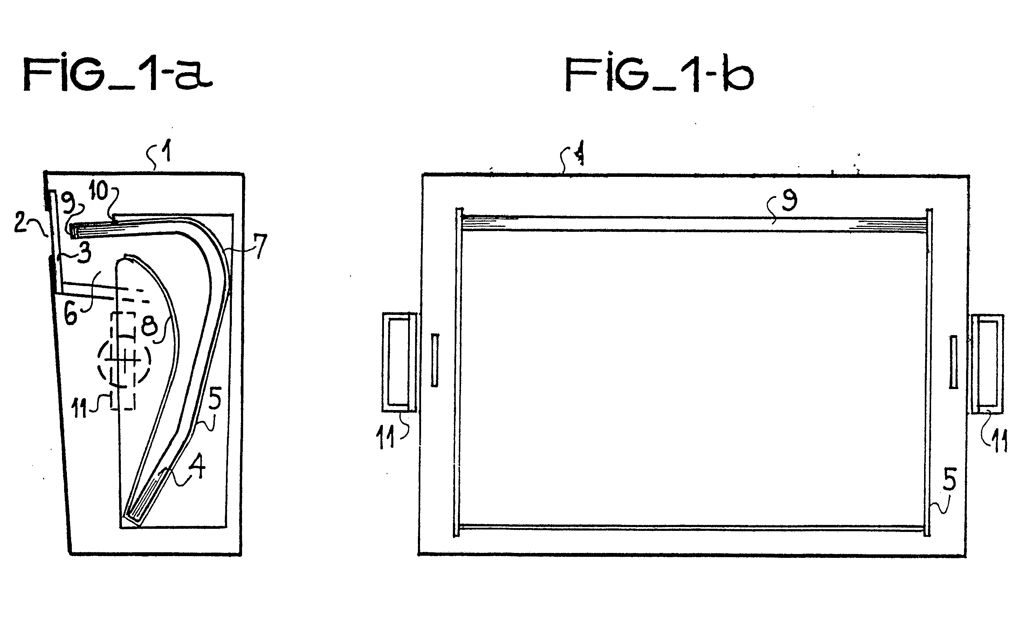

Un magasin selon l'invention, comporte comme schématiquement représenté par exemple aux figures 1a et 1b, un boîtier externe 1 étanche à la lumière comportant une fente allonge 2 par laquell sont introduits les films, cette fente étant, dans la position dite »de repos« illustrée sur ces deux figures, obturée par un volet mobile 3 dont le fonctionnement sera expliqué plus loin.

Selon la présente invention, un paquet 4 de films vierges, directement empilés les uns sur les autres, est disposé dans un réceptacle allongé 5 dont la section présente la forme d'une goulotte incurvée comme représenté figure 1a et dont l'extrémité située devant la fente 2 du boîtier externe est ouverte en 6. La paroi externe 7 de ce réceptacle en forme de goulotte est fortement incurvée de manière que le paquet de films qui y est logé soit lui-même incurvé. La paroi interne 8 est avantageusement moins fortement incurvée que la paroi 7.

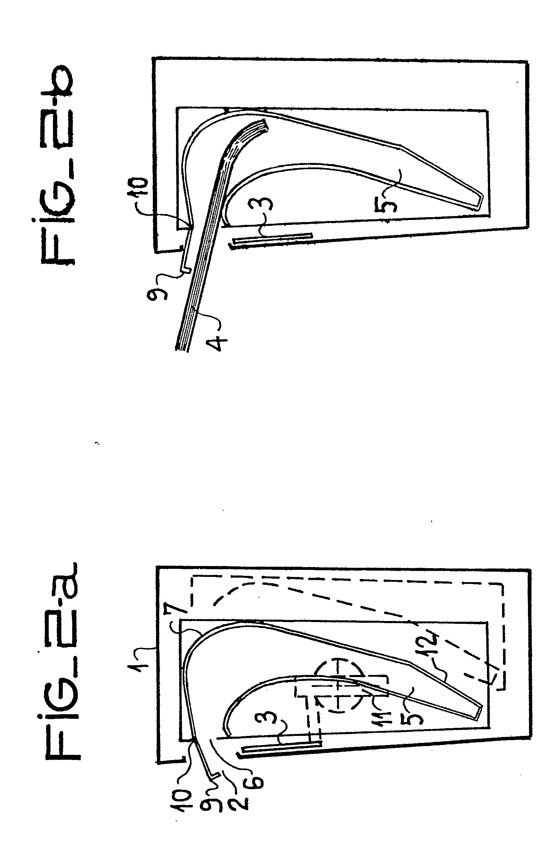

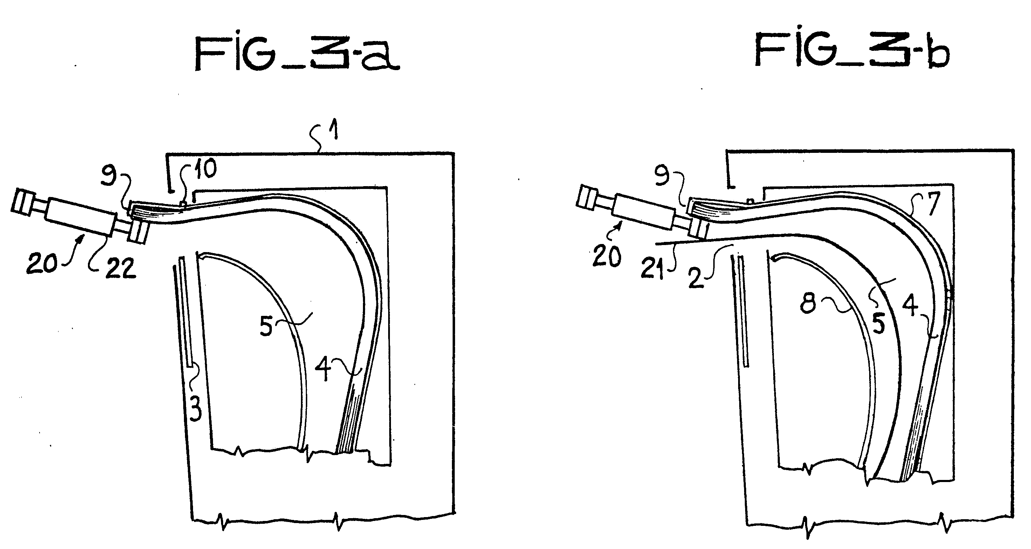

L'extrémité de la paroi externe 7 située au voisinage de l'ouverture 6 présente un rebord 9 destiné à retenir le bord des films en paquet, de manière à les plaquer contre la paroi externe bombée 7 et à les maintenir cambrés. Cette extrémité est avantageusement articulée autour d'une charnière souple et élastique 10 qui lui permet d'appuyer les films vers le dispositif d'extraction du changeur (figures 3a et 3b) lors de son utilisation, et de faciliter l'introduction du paquet de films (figures 2a et 2b) avant son utilisation.

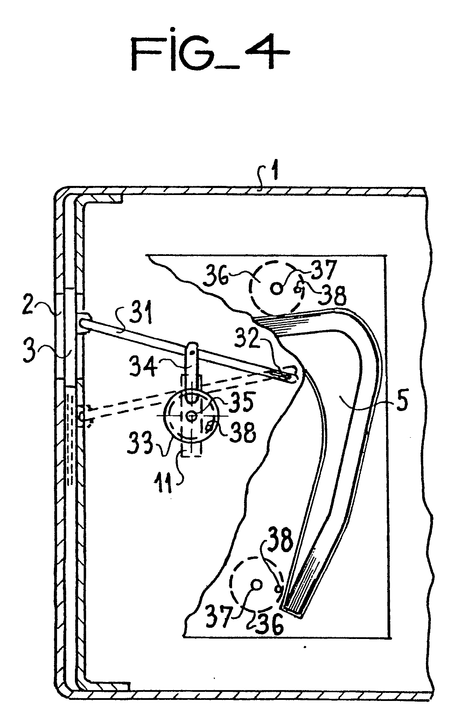

Les moyens qui permettent de passer de la position »de repos« représentées figure 1 où le volet 3 est fermé et le réceptacle en forme de goulotte 5 complètement situé à l'intérieur du boîter externe 1, à la position »de chargement« (figures 2a et 2b) ou »de travail« (figures 3a et 3b) où le volet 3 est ouvert et le réceptacle 5 légèrement sorti du boîtier 1 ne sont que très schématiquement représentés ici. Ils consistent en un certain nombre de tringleries et de plateaux qui seront décrits avec la figure 4. Ils sont actionnés, de l'extérieur du boîtier 1, par une poignée pivotante 11 qui commande avantageusement, en même temps, les déplacements du volet et du réceptacle.

On voit sur les figures 2a et 2b comment procéder au chargement en films du magasin. Il est bien entendu que cette opération, préalable à toute utilisation du magasin sur un changeur, se fait en chambre noire, ou en machine permettant le chargement en pleine lumière.

Le magasin ayant été placé en position de chargement par la manoeuvre de la poignée 11, le volet 3 est ouvert et le récepteur 5 est avancé vers la fente 2 de manière que son ouverture 6 soit facilement accessible. L'extrémité articulée 9 du réceptacle 5 se trouve par exemple légèrement à l'extérieur du boîtier 1.

L'introduction du paquet de films 4 par l'ouverture 6 est facilitée par l'articulation 9. Elle se poursuit jusqu'à ce que le bord des films soit retenu par le rebord 9.

Il est à noter que la cambrure de la goulotte et son fond incliné 12 obligent les films, lors de leur introduction, à glisser l'un sur l'autre et à se positionner de façon dégressive. Il en résulte une séparation entre les films qui supprime le risque d'adhérence lorsqu'ils seront extraits un à un du magasin.

Les figures 3a et 3b représentent schématiquement deux stades du magasin en cours de fonctionnement en association avec un changeur de films muni de moyens de préhension des films un par un. Le changeur n'a pas été représenté ici; seul a schématiquement été représenté un mode de réalisation possible de ses moyens de préhension. Il s'agit ici d'un dispositif 20 permettant de séparer un film 21 de la pile de films 4, déjà décrit dans le brevet français n° 75.17794 déposé par la Compagnie Générale de Radiologie le 6 juin 1975 et publié sous le n° 2.313.696. Ce brevet intitulé »Dispositif d'extraction successive de feuilles de films, une par une, d'une pile de films précoupés au même format, notamment pour des appareils changeurs de films radiographiques« décrit et revendique un dispositif à lame (non visible ici) portée par un disque 22 dont la rotation assure le décollement d'un film 21 de la pile 4.

Il est clair que tout type de moyens de préhension susceptibles de décoller un film 21 de la pile 4 pourrait être utilisé ici.

Dès l'instant que le film 21, légèrement décollé de la pile 4 par le dispositif 20, n'est plus maintenu par le rebord 9, son élasticité et la cambrure initiale que lui assurait la forme 7 de la goulotte, le font s'avancer dans le réceptacle 5 comme indiqué figure 3b.

Il est ainsi séparé de la pile de films 4 sans frottement et sans problème d'adhérence et d'électricité statique. Il est de plus déjà en position avancée dans l'ouverture 2 du magasin, ce qui facilite son transfert dans le changeur, par exemple par des rouleaux d'entraînement non représentés ici.

La figure 4 qui représente, vu en coupe partiellement arrachée un magasin de l'invention, permet de comprendre le fonctionnement des moyens assurant l'ouverture et la fermeture du volet 3 d'une part, les déplacements du réceptacle 5 d'autre part.

Le volet 3 est relié au levier 31; celui-ci est articulé, par l'intermédiaire du pivot 32, sur le boîtier externe 1 du magasin. Le levier 31 est relié au plateau 33 par l'intermédiaire du levier 34. Le plateau 33 est embrayé sur l'arbre 35 qui est solidaire de la poignée 11.

Lorsqu'on tourne la poignée 11 de 180°, par l'intermédiaire des leviers, le volet 3 se ferme (position en traits pleins) ou s'ouvre (position en traits interrompus).

Quant au réceptacle en forme de goulotte 5, il est fixé au boîtier externe 1, de chaque côté, par l'intermédiaire de trois plateaux tels que 36 et 33.

Les pivots 37 des plateaux 36 sont fixés sur le boîtier externe 1; les plateaux 36 tournent sur ces pivots.

Le réceptacle et sa goulotte 5 est relié aux plateaux 36 et 33 par l'intermédiaire des pivots excentrés 38. Pendant la rotation de 180° de la poignée 11, correspondant à l'ouverture du volet 3, le réceptacle en goulotte 5 passe en position de chargement (ou de travail), c'est-à-dire s'avance vers l'ouverture 2 du magasin.

## Revendications

1. Magasin débiteur de films pour changeur de films radiographiques comportant des moyens de préhension des films un à un, caractérisé en ce qu'il comporte, dans un boîtier externe (1) étanche à la lumière:

— un réceptable (5) des films (4) en paquet, en forme de goulotte incurvée ouverte (6) à une extrémité, la courbure de cette goulotte contraignant le paquet de films (4) qu'elle reçoit à une cambrure suffisante pour leur donner une élasticité provoquant, lors de l'extraction d'un film, un décollement et une séparation brusques du film en cours d'extraction;
— un volet (3) mobile dont l'ouverture permet l'accès à l'ouverture (6) de la goulotte (5);
— des moyens de déplacement du réceptacle en forme de goulotte tels que, dans une première position dite »de repos«, ce réceptacle (5) soit complètement contenu à l'intérieur du boîtier externe (1), tandis que dans une deuxième position dite »de chargement et de travail«, dans laquelle le volet mobile (3) est ouvert, le réceptacle (5) est avancé dans le boîtier (1) vers la fente (2) libérée par l'ouverture du volet (3) de manière que l'extrémité correspondante du paquet de films (4) sorte par cette fente (2) et soit accessible pour les moyens (20) de préhension des films équipant le changeur de films.

2. Magasin selon la revendication 1, caractérisé en ce que le volet mobile (3) et les moyens de déplacement du réceptacle sont actionnés par des moyens de commande (11) communs, de manière que l'ouverture du volet (3) s'accompagne d'une avancée, vers la fente (2) qu'elle dégage, du réceptacle (5) dont l'extrémité ouverte (6) sort ainsi par la fente (2).

3. Magasin selon la revendication 1 ou 2, caractérisé en ce que la paroi externe (7) de la goulotte (5) se termine, à son extrémité ouverte (6), par une partie articulée (10) présentant un rebord (9) de retenue du paquet (4) de films, l'articulation de cette partie lui permettant une légère rotation autor d'un axe parallèle à la fente (2) et étant élastique de manière à appuyer les films vers l'ouverture (6) du réceptacle et vers les moyens (20) de préhension du changeur auquel est associé le magasin.

4. Changeur de films radiographiques comportant des moyens (20) de préhension des films un par un, caractérisé en ce qu'il est équipé d'un magasin débiteur de films selon l'une des revendications 1 à 3.

## Patentansprüche

1. Filmabgabemagazin für einen Radiographie-Filmwechsler, der eine die Filme einen nach dem anderen greifenden Filmgreifvorrichtung aufweist, dadurch gekennzeichnet, daß es in einem lichtdichten Außengehäuse (1) aufweist:

— einen Behälter (5) für ein Pack von Filmen (4), in Form eines an einem Ende offenen (6) gebogenen Schachtes, wobei die Krümmung dieses Schachtes das Pack von Filmen (4) derart zwangsläufig führt, daß es eine genügende Biegung erhält, die aufgrund der Elastizität der Filme beim Herausziehen eines Films eine plötzliche Ablösung und Trennung desselben vom Pack bewirkt;
— einen beweglichen Schieber (3), dessen Öffnen den Zugang zur Öffnung (6) des Schachtes (5) ermöglicht;
— eine Vorrichtung zur Bewegung des schachtförmigen Behälters derart, daß in einer ersten Stellung, der sogenannten Ruhestellung, dieser Behälter (5) vollständig im Inneren des Außengehäuses (1) enthalten ist, während in einer zweiten Stellung, der sogenannten Lade- und Arbeitsstellung, in der der bewegliche Schieber (3) offen ist, der Behälter (5) im Gehäuse (1) zu dem durch das Öffnen des Schiebers (3) freigegebenen Schlitz (2) derart vorgeschoben ist, daß das entsprechende Ende des Packs von Filmen (4) durch diesen Schlitz (2) austritt und für die Filmgreifvorrichtung (20) zugänglich ist, mit der der Filmwechsler ausgerüstet ist.

2. Magazin nach Anspruch 1, dadurch gekennzeichnet, daß der bewegliche Schieber (3) und die Vorrichtung zum Bewegen des Behälters durch eine gemeinsame Steuervorrichtung (11) so betätigt werden, daß das Öffnen des Schiebers (3) begleitet ist von einer Vorwärtsbewegung des Behälters (5) zu dem vom Schieber freigegebenen Schlitz (2) hin, sodaß das offene Ende (6) des Behälters (5) durch den Schlitz (2) heraustritt.

3. Magazin nach Anspruch 1 oder 2, dadurch

7 0 025 390 8

gekennzeichnet, daß die Außenwand (7) des schachtförmigen Behälters (5) an seinem offenen Ende (6) in einem angelenkten Teil (10) endet, das einen umgebogenen Rand zum Zurückhalten des Packs von Filmen (4) aufweist, wobei die Anlenkung dieses Teiles ihm eine geringe Drehung um eine zum Schlitz (2) parallele Achse ermöglicht und elastisch ist, um die Filme zur Öffnung (6) des Behälters und zur Filmgreifvorrichtung (20) des Filmwechslers, mit dem das Magazin zusammenwirkt, hin zu drücken.

4. Radiographie-Filmwechsler mit einer die Filme einen nach dem anderen greifenden Filmgreifvorrichtung (20), dadurch gekennzeichnet, daß er mit einem Filmabgabemagazin nach einem der Ansprüche 1 bis 4 ausgerüstet ist.

**Claims**

1. A film dispensing magazine for a radiographic film exchanger comprising film gripping means gripping one film after the other, characterized in that it comprises in a light-tight external housing (1):

— a receptacle (5) for a pack of films (4) in the form of a courved shaft open (6) at one end, the curvature of said shaft constraining said pack of films (4) such that sufficient bend is imparted thereto which due to the elasticity of the films causes upon extraktion of a film a sudden peeling-off and separation thereof from said pack;
— a movable slide (3) the opening of which permits access to said opening (6) of said shaft (5);
— means for moving said shaft-like receptacle such that in a first position, the so-called rest position, said receptacle (5) is completely contained within said external housing (1), whereas in a second position, the so-called loading and working position, in which said movable slide (3) is open, said receptacle (5) is advanced in said housing (1) towards the slot (2) exposed by the opening of said slide (3) such that the respective end of said pack of films (4) emerges from said slot (2) and is accessible to said film gripping means (20) with which said film exchanger is equipped.

2. A magazine as claimed in claim 1, characterized in that said movable slide (3) and said means for moving said receptacle are operated by common control means (11) such that the opening of said slide (3) is accompanied by an advance of said receptacle (5) towards said slot (2) exposed by said slide so that said open end (6) of said receptacle (5) emerges from said slot (2).

3. A magazine as claimed in claim 1 or claim 2, characterized in that the external wall (7) of said shaft-like receptacle (5) terminates at its open end (6) in an articulated part (10) having a turned-down edge for retaining said pack of films (4), the articulation of said part permitting it to rotate slightly about an axis parallel to said slot (2) and being resilient so as to urge the films towards said opening (6) of said receptacle and towards said film gripping means (20) of said film exchanger with which the magazine cooperates.

4. A radiographic film exchanger comprising film gripping means (20) gripping one film after the other, characterized in that it is equipped with a film dispensing magazine as claimed in any of claims 1 to 4.

# FIG_1-a

# FIG_1-b

0 025 390

FIG_2·b

FIG_2·a

FIG_3-a

FIG_3-b

0 025 390

# FIG_4